# EUROPÄISCHE PATENTSCHRIFT

(11) **EP 2 842 690 B1**
(45) Veröffentlichungstag und Bekanntmachung des Hinweises auf die Patenterteilung: **29.11.2017**
(21) Anmeldenummer: 14180616.6
(22) Anmeldetag: 12.08.2014
(51) Int. Cl.: B24B 27/08, B23Q 9/00, B23D 45/12, B23D 45/16, B26D 3/16, B23D 45/00, B23D 57/00

(54) **Verfahren zum Durchtrennen einer Leitung und Bearbeitungsvorrichtung mit einer Führungsvorrichtung zum Bearbeiten einer Leitung mit einer spanenden und/oder schleifenden Handmaschine**
Method of cutting through a conduit and machining device for machining a conduit with a guiding device and a cutting and/or abrasive hand tool
Procédé de sectionnement d'une conduite et dispositif d'usinage pourvu d'un dispositif de guidage destiné à usiner une conduite à l'aide d'une machine à main d'enlèvement de copeaux et/ou abrasive

(30) Priorität: 02.09.2013 DE 102013109543
(43) Veröffentlichungstag der Anmeldung: 04.03.2015
(73) Patentinhaber: Aquabad GmbH, 35099 Burgwald (DE)
(72) Erfinder: Kowalewski, Klaus, 35099 Burgwald (DE)
(74) Vertreter: Patentanwälte Olbricht Buchhold Keulertz

(56) Entgegenhaltungen:
- WO-A1-02/094486
- DE-A1- 3 246 786
- DE-B- 1 128 320
- US-A- 4 243 011
- US-A- 4 729 698
- US-A1- 2001 015 119
- US-A1- 2009 307 910
- US-B1- 6 941 660

## Beschreibung

Die Erfindung betrifft ein Verfahren zum Durchtrennen einer Leitung mit einer Bearbeitungsvorrichtung gemäß dem Oberbegriff des Anspruchs 1, sowie eine Bearbeitungsvorrichtung für Leitungen gemäß dem Oberbegriff des Anspruchs 6. Ein derartiges Verfahren und eine derartige Bearbeitungsvorrichtung sind aus dem Dokument US 4 243 011 A bekannt.

Im Stand der Technik werden Leitungen meist mit einem Winkelschneider/Winkelschleifer durchtrennt, um Ver- bzw. Abzweigungselemente an ein Rohr anzufügen oder in dieses einzusetzen.

Bereits im losen Zustand von (Rohr-)Leitungen bereitet ein rechtwinkliges Ablängen Schwierigkeiten mit handgeführten Geräten. Daher weicht man gerne auf stationär betriebene Maschinen wie Band- oder Kappsägen aus. Diese sind jedoch teuer und schwer transportabel.

Bei bereits verlegten Leitungen ist ein Einsatz solcher stationären Maschinen nicht möglich. Zum Durchtrennen bereits verlegter Leitungen wird daher auf handgeführte Trenn- bzw. Winkelschleifer zurückgegriffen. Mit diesen gelingt meist kein präzises senkrechtes Ablängen/Durchtrennen der Leitung. Außerdem rutscht die Trennscheibe oftmals ab, wenn auch nur einige Millimeter, sodass der durchgeführte Schnitt beabstandet zur gewünschten Position liegt.

Ein weiteres Problem ist die Größe der Trennscheiben, welche meist um ein vielfaches größer ist als der Leitungsdurchmesser. Eine Durchtrennung der Leitung gelingt nämlich aus einer Arbeitsrichtung nur, wenn der Radius der Trennscheibe zuzüglich des Radius der seitlichen Trennscheibenaufnahme größer ist als der Leitungsdurchmesser.

Bei in der Wand liegenden Leitungen wird mit solch großen Trennscheiben regelmäßig ein langer Schnitt in die Wand eingebracht, der später wieder zu schließen ist. Dies ist vor allem bei Fliesenspiegeln ein großes Problem. Darüber hinaus können benachbarte Leitungen im Schnittbereich liegen und beschädigt werden, dies auch im nicht sichtbaren Bereich unter Putz.

Problematisch sind weiterhin ein hoher Funkenflug, Brandgefahr, eine erhöhte Verletzungsgefahr durch frei zugängliche und gegebenenfalls berstende Trennscheiben, sowie staubbedingt schlechte Sicht und Staublungen. Zusätzlich dringt Schmutz in die Leitung ein, welcher anschließend zu Verunreinigungen und Verstopfungen führen kann.

Aufgabe der Erfindung ist es daher, die Nachteile des Standes der Technik zu beseitigen und eine Vorrichtung und/oder ein Verfahren zu entwickeln, mit dem auf einfache Weise präzise Schnitte an Leitungen, insbesondere auch an verlegten Leitungen, möglich sind. Eine notwendige Freilegung der Leitung soll sich auf ein Minimum beschränken, sodass notwendige Nacharbeiten gering gehalten werden. Darüber hinaus sollen Funkenflug vermieden und die Brandgefahr verringert werden. Weitere Ziele sind eine geringe Verletzungsgefahr und wenig Staubentwicklung.

Hauptmerkmale der Erfindung sind in den unabhängigen Ansprüchen 1 und 6 angegeben. Ausgestaltungen sind Gegenstand der Ansprüche 2 bis 5 und 7 bis 15.

Die Erfindung betrifft eine Bearbeitungsvorrichtung für Leitungen gemäß dem unabhängigen Anspruch 6, mit einer Führungsvorrichtung und mit einer spanenden und/oder schleifenden Handmaschine, die über das Maschinenträgerelement an dem Leitungsanschlag gelagert ist. Die Führungsvorrichtung zum Bearbeiten einer in Längsrichtung ausgerichteten Leitung mit einer spanenden und/oder schleifenden Handmaschine, vorzugsweise mit einem Winkelschneider und/oder einer Bohrmaschine, ist handgeführt bewegbar und weist einen Leitungsanschlag auf. Der Leitungsanschlag hat eine in Längsrichtung ausgerichtete Aufnahmemulde zur Abstützung auf einer Leitung. Am Leitungsanschlag ist ein Maschinenträgerelement gelagert, das relativ zum Leitungsanschlag sowie quer zur Längsrichtung bewegbar (gelagert) ist.

Vorteilhaft hieran ist, dass die Handmaschine durch die Führungsvorrichtung präzise ansetz- und führbar ist. Damit lässt sich auch in schwierigen Arbeitssituationen wie in Ecken und über Kopf ein präzises Schnittergebnis erzielen. Je nach Spezifikation der Führungsvorrichtung lassen sich auch die weiteren zur Führungsvorrichtung beschriebenen Vorteile realisieren.

Vorteilhaft an der Führungsvorrichtung ist, dass die Schnittführung der Handmaschine präzise durchführbar ist. Auch bereits vorhandene Handmaschinen können mit einer solchen Führungsvorrichtung nachgerüstet werden. Das Aufsetzen des Leitungsanschlags auf die Leitung führt zu einer Kontaktzone ohne relative Bewegung bei der Schnittdurchführung. Ein Abrutschen wird hierdurch vermieden. Zusätzlich kann die Aufnahmemulde ein rutschhemmendes Material aufweisen, um ein Verrutschen zu verhindern. Die Gefahr, benachbarte Leitungen zu beschädigen, ist bereits durch die Führung mit der Führungsvorrichtung reduziert. Selbst bei Überkopfarbeiten oder in Ecken werden so präzise Schnittergebnisse erzielt, wobei gleichzeitig die Personenverletzungsgefahr reduziert ist.

Gemäß der Erfindung weist die Handmaschine eine Trennscheibe auf, welche von einem Antriebsmotor rotierend um eine Rotationsachse angetrieben ist. Mit einer Trennscheibe lässt sich ein präziser Schnitt durch die Leitung durchführen. Ein gebohrtes Loch lässt sich zum Einführen einer seitlichen Lagerung einer Trennscheibe nutzen. Auf diese Weise gelingt es die Rotationsachse der Trennscheibe bis in das Innere der Leitung zu bewegen. Notwendig ist bei einem Schnitt am Lochrand, dass gegenüber der einseitigen Lagerung der Trennscheibe eine Befestigungsmutter in der Trennscheibe versenkt angeordnet ist, das heißt sie steht nicht über. Dies kann mit einer gekröpften Trennscheibe erreicht werden. Entsprechend kann die Trennscheibe einen Durchmesser aufweisen, welcher in etwa dem Leitungsdurchmesser entspricht.

Günstig ist es, wenn die Handmaschine eine Spindel zur Aufnahme eines Bohrers (Bohrmaschine) und zur abgewinkelten Aufnahme einer Trennscheibe (Winkelschneider) aufweist. Durch Wechseln der Werkzeuge lässt sich so die Bearbeitungsvorrichtung von einer Bohrmaschine auf einen Winkelschneider umrüsten. So ist erst ein Loch in die Leitung bohrbar und anschließend eine Durchtrennung mit kleiner Trennscheibe möglich.

Gemäß der Erfindung verfügt die Handmaschine der Bearbeitungsvorrichtung über eine Trennscheibe, welche von einem Antriebsmotor rotierend um eine Rotationsachse angetrieben ist, wobei die Rotationsachse parallel zur Längsrichtung ausgerichtet sein kann, wobei die Handmaschine über das Maschinenträgerelement vorzugsweise derart linear sowie senkrecht zur Längsrichtung bewegbar an dem Leitungsanschlag gelagert ist, dass die Trennscheibe durch eine zentrale Maschinenöffnung der Aufnahmemulde tauchbar ist. Mithin ist ein präziser senkrechter Schnitt durch die Leitung möglich. Zu beiden Seiten der Trennscheibe bestehen Auflagepunkte auf der Leitung, sodass die Führungsvorrichtung stabil aufsteht. Gleichzeitig sind Personen vor drehenden und umherfliegenden Gegenständen schützbar, wenn das Werkzeug und/oder die Schnittstelle weitestgehend verdeckt werden. Zusätzlich lässt sich die Peripherie vor Schmutz, Staub und Funkenflug schützen.

Gemäß einer Ausgestaltungsvariante ist das Maschinenträgerelement linear bewegbar an dem Leitungsanschlag gelagert. Hierdurch ist ein geringer Arbeitsraum erforderlich und die lineare Führung ist kostengünstig und unempfindlich gegen Schmutz realisierbar. Gleichzeitig ist eine lineare Bewegung für die handführende Person sehr gut beherrschbar, wodurch auf einfache Art ein präziser Schnitt gelingt.

Eine hohe Standstabilität des Leitungsanschlags erreicht man, wenn man die Aufnahmemulde mit wenigstens zwei in der Längsrichtung beabstandeten Auflagepunkten zur Auflage auf der Leitung versieht. Erhöht werden kann diese Stabilität durch das Anordnen dieser Auflagepunkte zu beiden Seiten des aufzunehmenden Trenn- oder Spanwerkzeugs, z.B. der Trennscheibe.

Indem die Aufnahmemulde der Führungsvorrichtung eine zentrale Maschinendurchführung aufweist, wird die Handmaschine mit ihrem Werkzeug durch die Maschinendurchführung getaucht. Damit liegt die Bearbeitungszone inmitten der Mulde. Dies hat den Vorteil, dass eine hohe Standfestigkeit des Leitungsanschlags auf einem kurzen Leitungsabschnitt erreicht wird. Entsprechend klein muss ein zugängiger Bereich der zu bearbeitenden Leitung sein. Außerdem kann die Maschinendurchführung mit einer Absaugeinrichtung verbunden werden. Eine solche kann hier effektiv Staub entfernen. Gleichzeitig sind ein Funkenflug und damit eine Brandgefahr reduzierbar.

Fernerhin ist die Aufnahmemulde der Führungsvorrichtung der Bearbeitungsvorrichtung gemäß der Erfindung von zwei gegenüberliegenden, endseitigen Ausnehmungen in den Wandungen eines Vierkantrohres ausgebildet.

Die Gestaltung der Aufnahmemulde sieht also zwei gegenüberliegende, endseitige Ausnehmungen in den Wandungen eines Vierkantrohres vor. Damit ist die Aufnahmemulde in Längsrichtung verhältnismäßig kurz und hat trotzdem zwei weit voneinander beabstandete und Stabilität verleihende Auflagepunkte. In Längsrichtung der Leitung ist ein paralleler Verlauf der anderen Vierkantwandungen zur Leitung gegeben. Die parallelen Vierkantwandungen sind so sehr dicht an der Leitung angeordnet und es kann auf engem Raum gearbeitet werden. Der Hohlraum eines solchen Vierkants kann mit seiner endseitigen Öffnung die Maschinendurchführung ausbilden. Das Vierkantrohr hat bevorzugt einen im Wesentlichen quadratischen Querschnitt. Je nach Dimensionierung der Handmaschine können jedoch auch Querschnitte im Verhältnis bis zu circa 5:3 vorgesehen werden. Außerdem sollte das Vierkantrohr endseitig im Wesentlichen gerade abgelängt sein. Die Aufnahmemulde durchbricht dann die ansonsten gerade Stirnfläche des Vierkantrohrs.

In einer speziellen Weiterentwicklung der Erfindung ist das Maschinenträgerelement innerhalb des Vierkantrohres gelagert. Entsprechend ist später auch die Handmaschine wenigstens teilweise innerhalb des Vierkantrohrs gelagert. Die Vorteile hiervon sind eine hohe Standfestigkeit aufgrund der zentralen Maschinenführung, ein gutes Schnittergebnis, eine gute Schmutzvermeidung, ein geringer Platzbedarf und ein hoher Verletzungsschutz. Vorzugsweise weist das bewegbar gelagerte Maschinenträgerelement ein Vierkantrohr auf, welches teleskopierbar innerhalb des Vierkantrohres des Leitungsanschlags gelagert ist.

In einer Variante der Bearbeitungsvorrichtung ist das Maschinenträgerelement innerhalb des Vierkantrohres gelagert, wobei die Handmaschine teilweise innerhalb des Vierkantrohres positioniert ist und einen aus dem Vierkantrohr herausragenden Haltegriff aufweist. Mit dem Vierkantrohr wird eine präzise, kostengünstige und standfeste Führung der Maschine erreicht. Außerdem verdeckt das Vierkantrohr die Schnittstelle, wodurch Staubentwicklung und Funkenflug vermieden sowie Personen geschützt werden. Mit dem Haltegriff wird ein präzises Maschinenhandling erreicht. Der Haltegriff liegt bevorzugt auf der von der Aufnahmemulde abgewandten Seite des Vierkantrohrs, hier insbesondere senkrecht oberhalb der späteren Schnittzone. Vorzugsweise wird das bewegbar gelagerte Maschinenträgerelement als teleskopierbares, vierkantiges Innenrohr ausgeführt. Dessen seitliche Führung zwischen den beiden Vierkantrohren sollte zumindest im Arbeitsbereich länger sein als der Durchmesser des Vierkantrohres. Hierdurch wird ein Verkanten des Maschinenträgerelements im Vierkantrohr des Leitungsanschlags vermieden und der Schnitt präzise. Darüber hinaus ist es günstig, wenigstens zwei in Richtung des Vierkantrohres beabstandete Stützpunkte für die Handmaschine vorzusehen, damit die Verbindung zwischen Maschinenträgerelement und Handmaschine steif ist.

Des Weiteren sieht eine optionale Gestaltung vor, dass das Maschinenträgerelement senkrecht zur Längsrichtung bewegbar gelagert ist. Damit sind exakte senkrechte Schnitte durch die Leitung durchführbar. Gehrungsschnitte sind nur selten notwendig, weswegen ein Winkel oder eine Winkelverstellung zwischen dem Bewegungspfad des Maschinenträgerelements und der Aufnahmemulde nicht immer erforderlich ist. Vielfach genügt auch eine Ausgestaltung bei der das Maschinenträgerelement ausschließlich senkrecht zur Längsrichtung bewegbar gelagert ist.

Fernerhin besteht eine optionale Ergänzungsmöglichkeit dahingehend, dass das Maschinenträgerelement entgegen einer Federkraft eines Federelements von einer Ausgangsstellung in einen Arbeitsbereich bewegbar ist, wobei der Abstand zwischen dem Maschinenträgerelement und der Aufnahmemulde in der Ausgangsstellung größer ist als in dem Arbeitsbereich. Mithin ist eine Bedienung mit einer Hand möglich, bei der die Handmaschine mit der Führungsvorrichtung auf die Leitung aufgesetzt und anschließend entgegen der Federkraft relativ zur Führungsvorrichtung bewegt wird. Alternativ oder ergänzend ist ein (zweiter) Handgriff am Leitungsanschlag vorsehbar. Dann ist eine zweihändige Betätigung möglich/erforderlich. Hierdurch gelingt ein schnelles und präzises Ansetzen des Leitungsanschlags an der Leitung.

Die Führungsvorrichtung kann derart ausgestaltet sein, dass das Maschinenträgerelement ein Koppelmittel zur Festlegung einer Handmaschine oder Teil einer Handmaschine ist. Die erste Variante ist besonders flexibel hinsichtlich einer Austauschbarkeit der Handmaschine und Wartung. Sofern das Maschinenträgerelement Teil einer Handmaschine ist, betrifft dies insbesondere Produkte, die als nicht zerlegbare Einheit aus Führungsvorrichtung und Handmaschine ausgeführt sind.

Zur Vermeidung von Verschmutzung sieht eine optionale Ergänzung vor, dass das Vierkantrohr einen Absauganschluss aufweist. Damit kann entstehender Schmutz direkt von der Schnittstelle in das Vierkantrohr eingesaugt und anschließend über den Absauganschluss einem Auffangbehältnis zugeführt werden. Damit kommt es zu keiner Verschmutzung der Peripherie und auch ein Eindringen von Schmutz in die Leitung wird vermieden.

In einer näheren Ausgestaltungsform ist die Aufnahmemulde eine Negativschablone des Leitungsquerschnitts der Leitung. Damit kann die Führungsvorrichtung beziehungsweise deren Leitungsanschlag weitestgehend spielfrei auf die Leitung aufgesetzt werden. Gleichzeitig kann so eine um die Mulde laufende Dichtung ausgebildet werden, die in Kombination mit weiteren Merkmalen ein Austreten von Staub reduzieren kann. Am weitest verbreitet sind runde Leitungsquerschnitte, weswegen vorzugsweise eine teilkreis- beziehungsweise halbkreisförmige Aufnahmemulde vorgesehen wird. Damit auf engem Raum gearbeitet werden kann, bietet sich eine spezielle Variante an, bei welcher der Leitungsanschlag um maximal 20%, vorzugsweise um maximal 15%, in Querrichtung über die Leitung übersteht. Dies kann insbesondere dadurch erreicht werden, dass der Leitungsanschlag um maximal 20%, vorzugsweise um maximal 15%, über eine halbkreisförmige Mulde übersteht.

Zur Begrenzung einer Schnitttiefe ist es günstig, wenn die Lagerung zwischen dem Leitungsanschlag und dem Maschinenträgerelement einen Bewegungsanschlag aufweist. Dieser kann einstellbar ausgeführt sein, zum Beispiel als Stellschraube, Rastelement oder ähnliches.

Des Weiteren betrifft die Erfindung gemäß dem unabhängigen Anspruch 1 ein Verfahren zum Durchtrennen einer Leitung mit einer Bearbeitungsvorrichtung für Leitungen, mit einer Führungsvorrichtung zum Bearbeiten einer in Längsrichtung ausgerichteten Leitung mit einer spanenden und/oder schleifenden Handmaschine, wobei die Führungsvorrichtung handgeführt bewegbar ist und einen Leitungsanschlag aufweist, wobei der Leitungsanschlag eine in Längsrichtung ausgerichtete Aufnahmemulde zur Abstützung auf einer Leitung aufweist, und wobei am Leitungsanschlag ein Maschinenträgerelement gelagert ist, das relativ zum Leitungsanschlag sowie quer zur Längsrichtung bewegbar ist, und mit einer spanenden und/oder schleifenden Handmaschine, die über das Maschinenträgerelement) an dem Leitungsanschlag gelagert ist, wobei die Handmaschine eine Trennscheibe aufweist, welche von einem Antriebsmotor rotierend um eine Rotationsachse angetrieben ist, wobei die Rotationsachse parallel zur Längsrichtung ausgerichtet ist, und wobei der Durchmesser der Trennscheibe maximal 20%, vorzugsweise maximal 10%, größer ist als der Durchmesser der Leitung. Zunächst wird ein Loch in die Leitung gebohrt. Anschließend wird die Aufnahmemulde auf die Leitung aufgesetzt. Daraufhin wird die Handmaschine entsprechend der Lagerung des Maschinenträgerelements an dem Leitungsanschlag bewegt bis die Rotationsachse innerhalb der Leitung angeordnet ist, wobei ein Schnitt mit der Trennscheibe am in Längsrichtung des Loches liegenden Lochrand der Leitung durchgeführt wird.

Vorteilhaft hieran ist, dass der Schnitt mit einer sehr kleinen Trennscheibe durchführbar ist. Mithin erstreckt sich der Schnitt nicht in die Peripherie, zum Beispiel in umliegenden Putz, Fliesen und andere Leitungen. Beschädigungen und Nacharbeiten werden vermieden. Außerdem entsteht weniger Schmutz. Die Durchführung des Schnittes am Lochrand erlaubt nämlich ein Eintauchen der Lagerachse der Trennscheibe in die Leitung, insbesondere ein Eintauchen des Kopfes eines Winkelschneiders. Hierfür sollte der Durchmesser des Loches wenigstens 50%, vorzugsweise wenigstens 65%, von dem der Leitung betragen. Die exakte Position des Schnittes kann beispielsweise durch ein Anzeichnen der Position des Leitungsanschlags auf der Leitung getroffen werden.

Ein minimaler Trennscheibendurchmesser wird erreicht, wenn die Rotationsachse im Wesentlichen das Leitungszentrum erreicht. Es genügt dann ein Trennscheibendurchmesser entsprechend des Durchmessers einer runden Leitung oder des Durchmessers in Querrichtung einer eckigen Leitung. Hierbei kommt es jeweils zu einem Eintauchen einer einseitigen Lagerung der Trennscheibe, das heißt des Kopfes des Winkelschneiders, in das Loch.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht eines Leitungsanschlags;
- Fig. 2: eine perspektivische Ansicht eines Maschinenträgerelements;
- Fig. 3: eine perspektivische Ansicht einer Leitung und einer Bearbeitungsvorrichtung in einer Ausgangsstellung; und
- Fig. 4: eine perspektivische Ansicht einer Leitung und der in Fig. 3 gezeigten Bearbeitungsvorrichtung jedoch ohne den Leitungsanschlag.

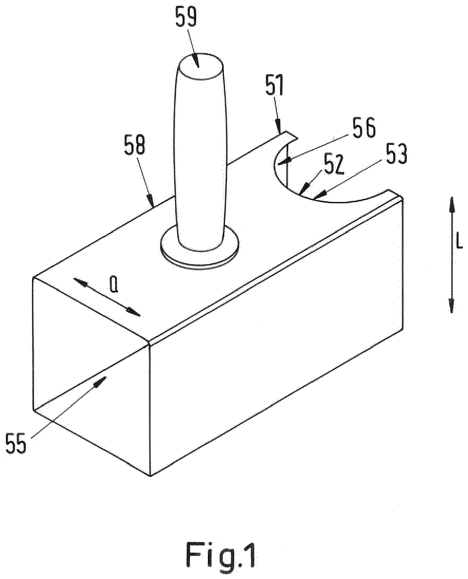

**Fig. 1** zeigt eine perspektivische Ansicht eines Leitungsanschlags 51. Der Leitungsanschlag 51 hat eine in Längsrichtung L ausgerichtete Aufnahmemulde 52 zur Abstützung auf einer Leitung. Die Aufnahmemulde 52 ist eine Negativschablone eines Leitungsquerschnitts der zu bearbeitenden Leitung, insbesondere ist sie halbkreisförmig. In Querrichtung Q steht der Leitungsanschlag 51 nur um circa 30% über die Aufnahmemulde 52 hinaus.

Man erkennt, dass der Leitungsanschlag 51 von einem Vierkantrohr 58 ausgebildet ist. Hierdurch weist die Aufnahmemulde 52 eine zentrale Maschinendurchführung 55 auf. Die Aufnahmemulde 52 wird im Wesentlichen von zwei gegenüberliegenden, endseitigen Ausnehmungen 56 in den Wandungen des Vierkantrohres 58 definiert. Mithin verfügt die Aufnahmemulde 52 über zwei in der Längsrichtung L beabstandete Auflagepunkte 53, insbesondere zu beiden Seiten der Maschinendurchführung 55 je einen. Auf der Außenseite des Vierkantrohres 58 ist ein Haltegriff 59 angebracht. Dieser weist in die Längsrichtung L.

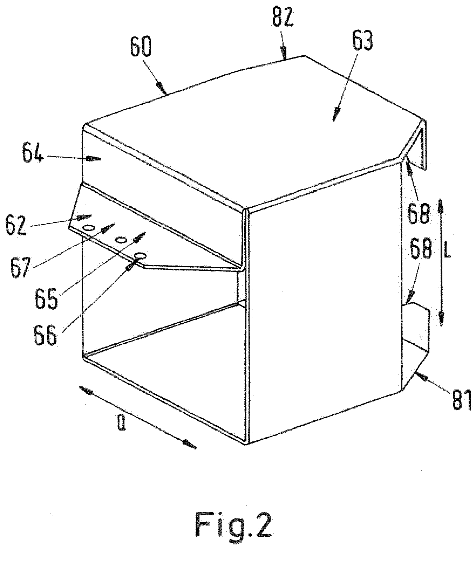

In **Fig. 2** ist eine perspektivische Ansicht eines Maschinenträgerelements 60 zu sehen. Dieses ist aus einem zweiten Vierkantrohr 63 hergestellt. Zur Festlegung einer Handmaschine ist an einem Ende des zweiten Vierkantrohrs 63 ein Koppelmittel 62 vorgesehen. Hierfür ist ein Überstand von einer der vier Wandungen des zweiten Vierkantrohres 63 zweifach rechtwinklig geknickt. Der mittlere Faltabschnitt 64 verschließt so das zweite Vierkantrohr 63 teilweise, insbesondere circa zu einem Viertel. Um eine hohe Stabilität zu erreichen, ist der mittlere Faltabschnitt 64 optional mit den benachbarten Vierkantwandungen verbindbar/verschweißbar. Der endseitige Faltabschnitt 65 ist gegenläufig abgewinkelt und steht über das zweite Vierkantrohr 63 hinaus. In ihn sind Befestigungslöcher 66 eingebracht, um eine Handmaschine anschrauben zu können. Durch den Überstand über das zweite Vierkantrohr 63 sind die Befestigungslöcher 66 bei einer Montage der Handmaschine am Maschinenträgerelement 60 gut zugänglich. Im Bereich der Befestigungslöcher 66 ist so ein erster Stützpunkt 67 für eine Handmaschine ausgebildet.

Auf der gegenüberliegenden Seite des zweiten Vierkantrohrs 63 setzen sich zwei gegenüberliegende Wandungen fort. Dadurch ist eine Führungsschiene ausgebildet, welche länger ist als der Durchmesser des zweiten Vierkantrohrs 63. Endseitig sind die Fortsätze 81, 82 nach innen abgewinkelt und bilden einen zweiten Stützpunkt 68 für eine Handmaschine aus. Weiterhin sind die beiden Fortsätze 81, 82 der Wandungen parallel zum gegenüberliegenden endseitigen Faltabschnitt 65. Im Zusammenbau mit einer Handmaschine wird so ein seitliches Verkippen einer Trennscheibe oder eines Bohrers vermieden.

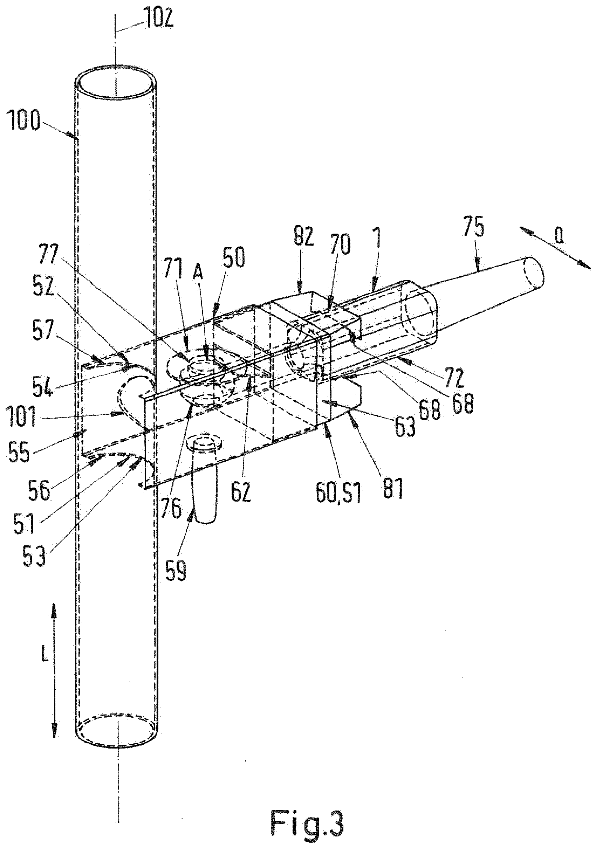

Der Leitungsanschlag 51 aus Fig. 1 und das Maschinenträgerelement 60 gemäß Fig. 2 finden sich beide in der zusammengebauten Bearbeitungsvorrichtung 1 von **Fig. 3** wieder. Fig. 3 zeigt die Bearbeitungsvorrichtung 1 in einer Ausgangsstellung S1 angesetzt an einer Leitung 100 aus einer perspektivischen Ansicht. Dabei sind nur die Umrisslinien dargestellt, nicht jedoch die geschlossenen Flächen, wodurch innenliegende Teile sichtbar sind.

Es wird deutlich, dass die Aufnahmemulde 52 eine Negativschablone des Leitungsquerschnitts der zu bearbeitenden Leitung 100 und insbesondere halbkreisförmig ist. Zu sehen sind hier auch die zwei gegenüberliegenden, endseitigen Ausnehmungen 56, 57 in den Wandungen des Vierkantrohres 58 und die so ausgebildeten beiden beabstandeten Auflagepunkte 53, 54. Mit der Aufnahmemulde 52 ist der Leitungsanschlag 51 auf die Leitung 100 aufgesetzt.

Das (zweite) Vierkantrohr 63 des Maschinenträgerelements 60 ist als teleskopisch verschiebbares Innenrohr in das Vierkantrohr 58 des Leitungsanschlags 41 eingesetzt. So zusammengesetzt liegt eine Führungsvorrichtung 50 vor. Das Maschinenträgerelement 60 ist also linear und senkrecht zur Längsrichtung L bewegbar in dem Leitungsanschlag 51 gelagert.

Der endseitige Faltabschnitt 65 am zweiten Vierkantrohr 63 weist dabei in Richtung zur Aufnahmemulde 52. Hierdurch wird ein Verkanten des zweiten Vierkantrohres 63 im ersten Vierkantrohr 58 vermieden sowie eine stabile Lagerung im Bearbeitungsbereich erreicht. Darüber hinaus weist der endseitige Faltabschnitt 65 quer zur Längsrichtung L. Hierdurch können die an einer Trennscheibe 71 entstehenden Drehmomente gut aufgenommen werden.

Ferner erkennt man, dass das Maschinenträgerelement 60 ein Koppelmittel zur Festlegung einer Handmaschine 70 ist. Letztere ist insbesondere über die Befestigungslöcher an den endseitigen Faltabschnitt (vgl. Fig. 2) angeschraubt. Zusätzlich wird die Handmaschine an dem zweiten Stützpunkt 68 in ihrer Lage relativ zum Maschinenträgerelement 60 gehaltert. Gemeinsam mit der Führungsvorrichtung 50 bildet die Handmaschine 70 eine handgeführte Bearbeitungsvorrichtung 1 für Leitungen 100 aus. Bei der Handmaschine 70 handelt es sich um einen Winkelschneider, insbesondere einen Winkelschleifer mit einer Trennscheibe 71. Die Trennscheibe 71 ist von einem Antriebsmotor 72 rotierend um eine Rotationsachse A angetrieben. Die Rotationsachse A ist in Längsrichtung L ausgerichtet und verläuft mithin parallel zum Leitungszentrum 102. Deutlich wird auch, dass die Trennscheibe 71 eine einseitige Lagerung 76 aufweist.

Gehalten wird die Bearbeitungsvorrichtung 1 mit je einer Hand am ersten Haltegriff 75 der Handmaschine 70 und am zweiten Haltegriff 59 des Leitungsanschlags 51. Durch Bewegung der Handmaschine 70 und des Maschinenträgerelements 60 von der hier gezeigten Ausgangsstellung S1 in Richtung der Leitung 100 ist die Trennscheibe 71 durch eine zentrale Maschinenöffnung 55 der Aufnahmemulde 52 tauchbar.

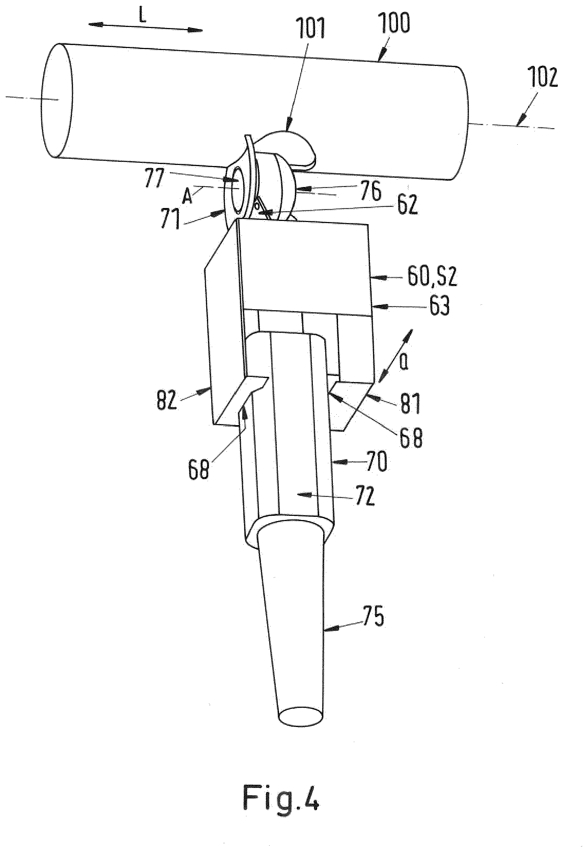

Hierdurch gelangt die Trennscheibe 71 in einem Arbeitsbereich S2 in Eingriff mit der Leitung 100, wie es in **Fig. 4** gezeigt ist. Fig. 4 zeigt im Wesentlichen eine perspektivische Ansicht der Bearbeitungsvorrichtung aus Fig. 3, wobei jedoch die Flächen intransparent dargestellt sind. Zur Verdeutlichung der inneren Bauteile wurde hier auf die Darstellung des Leitungsanschlags 51 verzichtet.

Damit die Trennscheibe 71, deren Durchmesser kaum größer ist als derjenige der Leitung 100, die Leitung 100 durchtrennen kann, ist in die Leitung zuvor ein (Bohr-)Loch 101 eingebracht worden (vgl. auch Fig. 3). Dessen Durchmesser beträgt wenigstens 50% dem des Leitungsdurchmessers. Auf diese Weise kann die einseitige Lagerung 76 der Trennscheibe 71 in das Loch 100 eingeführt werden, bis die Rotationsachse A im Wesentlichen im Leitungszentrum 102 angelangt. Hierfür wird der Schnitt mit der Trennscheibe 71 an einem in Längsrichtung L liegenden Lochrand des Loches 101 angesetzt. Die Trennscheibe 71 tangiert/berührt das Loch 101, sodass kein Steg zwischen dem Loch 101 und der Trennscheibe 71 verbleibt. Gleichzeitig erzielt man so eine gerade Stirnfläche an der abgeschnittenen Leitung 100, insbesondere auf der dem Loch 101 abgewandten Seite der Leitung 100. Notwendig ist bei einem Schnitt am Lochrand, dass gegenüber der einseitigen Lagerung 76 der Trennscheibe 71 eine Befestigungsmutter in der Trennscheibe 71 versenkt angeordnet ist, das heißt sie steht nicht über. Dies kann mit einer gekröpften Trennscheibe 71 erreicht werden.

Durch eine Drehung der Bearbeitungsvorrichtung 1 um 180 Grad kann auf der gegenüberliegenden Seite des Lochs 101 ein zweiter Schnitt durchgeführt werden, sodass beispielsweise ein T-Stück in die Leitung 100 eingesetzt werden kann.

Die Erfindung ist nicht auf eine der vorbeschriebenen Ausführungsformen beschränkt, sondern in vielfältiger Weise abwandelbar.

**Bezugszeichenliste**

| | | | |
|---|---|---|---|
| 1 | Bearbeitungsvorrichtung | | |
| | | 70 | Handmaschine |
| 50 | Führungsvorrichtung | 71 | Trennscheibe |
| 51 | Leitungsanschlag | 72 | Antriebsmotor |
| 52 | Aufnahmemulde | 75 | Haltegriff |
| 53 | erster Auflagepunkt | 76 | einseitige Lagerung |
| 54 | zweiter Auflagepunkt | 77 | Befestigungsmutter |
| 55 | Maschinendurchführung | | |
| 56 | erste Ausnehmung | 81 | erster Fortsatz |
| 57 | zweite Ausnehmung | 82 | zweiter Fortsatz |
| 58 | Vierkantrohr | | |
| 59 | zweiter Handgriff | 100 | Leitung |
| | | 101 | Loch |
| 60 | Maschinenträgerelement | 102 | Leitungszentrum |
| 62 | Koppelmittel | | |
| 63 | zweites Vierkantrohr | A | Rotationsachse |
| 64 | mittlerer Faltabschnitt | L | Längsrichtung |
| 65 | endseitiger Faltabschnitt | Q | Querrichtung |
| 66 | Befestigungslöcher | S1 | Ausgangsstellung |
| 67 | erster Stützpunkt | S2 | Arbeitsbereich |
| 68 | zweiter Stützpunkt | | |

## Patentansprüche

1. **Verfahren** zum Durchtrennen einer Leitung (100) mit einer Bearbeitungsvorrichtung (1) für Leitungen (100), mit einer Führungsvorrichtung (50) zum Bearbeiten einer in Längsrichtung (L) ausgerichteten Leitung (100) mit einer spanenden und/oder schleifenden Handmaschine (70), wobei die Führungsvorrichtung (50) handgeführt bewegbar ist und einen Leitungsanschlag (51) aufweist, wobei der Leitungsanschlag (51) eine in Längsrichtung (L) ausgerichtete Aufnahmemulde (52) zur Abstützung auf einer Leitung (100) aufweist, und wobei am Leitungsanschlag (51) ein Maschinenträgerelement (60) gelagert ist, das relativ zum Leitungsanschlag (51) sowie quer zur Längsrichtung (L) bewegbar ist, und mit einer spanenden und/oder schleifenden Handmaschine (70), die über das Maschinenträgerelement (60) an dem Leitungsanschlag (51) gelagert ist, wobei die Handmaschine (70) eine Trennscheibe (71) aufweist, welche von einem Antriebsmotor (72) rotierend um eine Rotationsachse (A) angetrieben ist, wobei die Rotationsachse (A) parallel zur Längsrichtung (L) ausgerichtet ist, und wobei der Durchmesser der Trennscheibe (71) maximal 20% größer ist als der Durchmesser der Leitung (100), **dadurch gekennzeichnet dass** das Verfahren die folgenden Schritte aufweist:
a) Bohren eines Loches (101) in die Leitung (100);
b) Aufsetzen der Aufnahmemulde (52) auf die Leitung (100);
c) Bewegen der Handmaschine (70) entsprechend der Lagerung des Maschinenträgerelements (60) an dem Leitungsanschlag (51) bis die Rotationsachse (A) innerhalb der Leitung (100) angeordnet ist, wobei ein Schnitt mit der Trennscheibe (71) am in Längsrichtung (L) des Loches (101) liegenden Lochrand der Leitung (100) durchgeführt wird.

2. Verfahren nach Anspruch 1, **dadurch gekennzeichnet, dass** die Aufnahmemulde (52) eine zentrale Maschinendurchführung (55) aufweist und die Handmaschine (70) mit ihrem Werkzeug, nämlich mit ihrer Trennscheibe (71), durch die Maschinendurchführung (55) getaucht wird.

3. Verfahren nach einem der vorhergehenden Ansprüche, **dadurch gekennzeichnet, dass** das Maschinenträgerelement (60) linear bewegbar an dem Leitungsanschlag (51) gelagert ist und eine lineare Bewegung durchgeführt wird.

4. Verfahren nach einem der vorhergehenden Ansprüche, **dadurch gekennzeichnet, dass** die Aufnahmemulde (52) von zwei gegenüberliegenden, endseitigen Ausnehmungen (56, 57) in den Wandungen eines Vierkantrohres (58) ausgebildet ist und auf die Leitung (100) aufgesetzt wird.

5. Verfahren nach Anspruch 4, **dadurch gekennzeichnet, dass** das Maschinenträgerelement (60) innerhalb und die Handmaschine wenigstens teilweise innerhalb des Vierkantrohres (58) gelagert sind und die Handmaschine (70) entsprechend der Lagerung des Maschinenträgerelements (60) an dem Leitungsanschlag (51) bewegt wird.

6. **Bearbeitungsvorrichtung** (1) für Leitungen (100), mit einer Führungsvorrichtung (50) zum Bearbeiten einer in Längsrichtung (L) ausgerichteten Leitung (100) mit einer spanenden und/oder schleifenden Handmaschine (70), wobei die Führungsvorrichtung (50) handgeführt bewegbar ist und einen Leitungsanschlag (51) aufweist, wobei der Leitungsanschlag (51) eine in Längsrichtung (L) ausgerichtete Aufnahmemulde (52) zur Abstützung auf einer Leitung (100) aufweist, wobei die Aufnahmemulde (52) eine zentrale Maschinendurchführung (55) aufweist, und wobei am Leitungsanschlag (51) ein Maschinenträgerelement (60) gelagert ist, das relativ zum Leitungsanschlag (51) sowie quer zur Längsrichtung (L) bewegbar ist, und mit einer spanenden und/oder schleifenden Handmaschine (70), die über das Maschinenträgerelement (60) an dem Leitungsanschlag (51) gelagert ist, wobei die Handmaschine (70) eine Trennscheibe (71) aufweist, welche von einem Antriebsmotor (72) rotierend um eine Rotationsachse (A) angetrieben ist, **dadurch gekennzeichnet, dass** die Aufnahmemulde (52) von zwei gegenüberliegenden, endseitigen Ausnehmungen (56, 57) in den Wandungen eines Vierkantrohres (58) ausgebildet ist, und die Handmaschine (70) mit ihrem Werkzeug, nämlich mit ihrer Trennscheibe inklusive der Rotationsachse (A), durch die Maschinendurchführung (55) tauchbar ist.

7. **Bearbeitungsvorrichtung** (1) nach Anspruch 6, **dadurch gekennzeichnet, dass** die Trennscheibe (71) eine einseitige Lagerung (76) aufweist.

8. **Bearbeitungsvorrichtung** (1) nach Anspruch 7, **dadurch gekennzeichnet, dass** gegenüber der einseitigen Lagerung (76) der Trennscheibe (71) eine Befestigungsmutter (77) in der Trennscheibe (71) versenkt angeordnet ist.

9. **Bearbeitungsvorrichtung** (1) nach einem der Ansprüche 6 bis 8, **dadurch gekennzeichnet, dass** das Maschinenträgerelement (60) senkrecht zur Längsrichtung (L) bewegbar gelagert ist.

10. **Bearbeitungsvorrichtung** (1) nach einem der Ansprüche 6 bis 9, **dadurch gekennzeichnet, dass** das Maschinenträgerelement (60) entgegen einer Federkraft eines Federelements von einer Ausgangsstellung (S1) in einen Arbeitsbereich (S2) bewegbar ist, wobei der Abstand zwischen dem Maschinenträgerelement (60) und der Aufnahmemulde (52) in der Ausgangsstellung (S1) größer ist als in dem Arbeitsbereich (S2).

11. **Bearbeitungsvorrichtung** (1) nach einem der Ansprüche 6 bis 10, **dadurch gekennzeichnet, dass** das Maschinenträgerelement (60) ein Koppelmittel zur Festlegung einer Handmaschine (70) oder Teil einer Handmaschine (70) ist.

12. **Bearbeitungsvorrichtung** (1) nach einem der Ansprüche 6 bis 12, **dadurch gekennzeichnet, dass** das Vierkantrohr (58) einen Absauganschluss aufweist.

13. Bearbeitungsvorrichtung (1) nach einem der Ansprüche 6 bis 13, **dadurch gekennzeichnet, dass** die Rotationsachse (A) parallel zur Längsrichtung (L) ausgerichtet ist, wobei die Handmaschine (70) über das Maschinenträgerelement (60) derart linear sowie senkrecht zur Längsrichtung (L) bewegbar an dem Leitungsanschlag (51) gelagert ist, dass die Trennscheibe (71) durch die zentrale Maschinenöffnung (55) der Aufnahmemulde (52) tauchbar ist.

14. **Bearbeitungsvorrichtung** (1) nach einem der Ansprüche 6 bis 13, **dadurch gekennzeichnet, dass** das Maschinenträgerelement (60) innerhalb des Vierkantrohres (58) gelagert ist.

15. Bearbeitungsvorrichtung (1) nach Anspruch 14, **dadurch gekennzeichnet, dass** die Handmaschine (70) teilweise innerhalb des Vierkantrohres (58) positioniert ist und einen aus dem Vierkantrohr (58) herausragenden Haltegriff (75) aufweist.

## Claims

1. Method for severing a line (100) with a processing device (1) for lines (100), having a guiding device (50) for processing a line (100) which is orientated in a longitudinal direction (L) with a cutting and/or grinding hand-operated machine (70), wherein the guiding device (50) can be moved in a state guided by hand and has a line stop (51), wherein the line stop (51) has a receiving recess (52) which is orientated in a longitudinal direction (L) for support on a line (100) and wherein there is supported on the line stop (51) a machine carrier element (60) which can be moved relative to the line stop (51) and transversely relative to the longitudinal direction (L), and having a cutting and/or grinding hand-operated machine (70) which is supported via the machine carrier element (60) on the line stop (51), wherein the hand-operated machine (70) has a separation disc (71) which is rotatably driven by a drive motor (72) about a rotation axis (A), wherein the rotation axis (A) is orientated parallel with the longitudinal direction (L), and wherein the diameter of the separation disc (71) is a maximum of 20% greater than the diameter of the line (100), **characterised in that** the method has the following steps:
a) drilling a hole (101) in the line (100);
b) placing the receiving recess (52) on the line (100);
c) moving the hand-operated machine (70) in accordance with the support of the machine carrier element (60) on the line stop (51) until the rotation axis (A) is arranged inside the line (100), wherein a cut with the separation disc (71) is carried out on the hole edge of the line (100) located in the longitudinal direction (L) of the hole (101).

2. Method according to claim 1, **characterised in that** the receiving recess (52) has a central machine passage (55) and the hand-operated machine (70) is introduced with the tool thereof, that is to say, with the separation disc (71) thereof, through the machine passage (55).

3. Method according to either of the preceding claims, **characterised in that** the machine carrier element (60) is supported so as to be able to be moved in a linear manner on the line stop (51) and a linear movement is carried out.

4. Method according to any one of the preceding claims, **characterised in that** the receiving recess (52) is constructed from two opposing end-side recesses (56, 57) in the walls of a square pipe (58) and is placed on the line (100).

5. Method according to claim 4, **characterised in that** the machine carrier element (60) is supported inside and the hand-operated machine at least partially inside the square pipe (58), and the hand-operated machine (70) is moved in accordance with the support of the machine carrier element (60) on the line stop (51).

6. Processing device (1) for lines (100), having a guiding device (50) for processing a line (100) which is orientated in a longitudinal direction (L) with a cutting and/or grinding hand-operated machine (70), wherein the guiding device (50) can be moved in a state guided by hand and has a line stop (51), wherein the line stop (51) has a receiving recess (52) which is orientated in a longitudinal direction (L) for support on a line (100), wherein the receiving recess (52) has a central machine passage (55) and wherein there is supported on the line stop (51) a machine carrier element (60) which can be moved relative to the line stop (51) and transversely relative to the longitudinal direction (L), and having a cutting and/or grinding hand-operated machine (70) which is supported via the machine carrier element (60) on the line stop (51), wherein the hand-operated machine (70) has a separation disc (71) which is rotatably driven by a drive motor (72) about a rotation axis (A), **characterised in that** the receiving recess (52) is constructed by two opposing end-side recesses (56, 57) in the walls of a square pipe (58) and the hand-operated machine (70) can be introduced with the tool thereof, that is to say, with the separation disc thereof, including the rotation axis (A), through the machine passage (55).

7. Processing device (1) according to claim 6, **characterised in that** the separation disc (71) has a single-sided support (76).

8. Processing device (1) according to claim 7, **characterised in that**, with respect to the single-sided support (76) of the separation disc (71), a securing nut (77) is arranged so as to be recessed in the separation disc (71).

9. Processing device (1) according to any one of claims 6 to 8, **characterised in that** the machine carrier element (60) is movably supported perpendicularly with respect to the longitudinal direction (L).

10. Processing device (1) according to any one of claims 6 to 9, **characterised in that** the machine carrier element (60) can be moved counter to a resilient force of a resilient element from a starting position (S1) into an operating region (S2), wherein the spacing between the machine carrier element (60) and the receiving recess (52) is greater in the starting position (S1) than in the operating region (S2).

11. Processing device (1) according to any one of claims 6 to 10, **characterised in that** the machine carrier element (60) is a coupling means for securing a hand-operated machine (70) or a portion of a hand-operated machine (70).

12. Processing device (1) according to any one of claims 6 to 12, **characterised in that** the square pipe (58) has a suction connection.

13. Processing device (1) according to any one of claims 6 to 13, **characterised in that** the rotation axis (A) is orientated parallel with the longitudinal direction (L), wherein the hand-operated machine (70) is supported by means of the machine carrier element (60) so as to be able to be moved in a linear manner and perpendicularly to the longitudinal direction (L) on the line stop (51) in such a manner that the separation disc (71) can be introduced through the central machine opening (55) of the receiving recess (52).

14. Processing device (1) according to any one of claims 6 to 13, **characterised in that** the machine carrier element (60) is supported inside the square pipe (58).

15. Processing device (1) according to claim 14, **characterised in that** the hand-operated machine (70) is positioned partially inside the square pipe (58) and has a handle (75) which protrudes from the square pipe (58).

## Revendications

1. Procédé pour couper une conduite (100) avec un dispositif d'usinage (1) pour conduites (100), avec un dispositif de guidage (50) pour usiner une conduite (100) orientée dans la direction longitudinale (L) avec une machine portative (70) coupant et/ou meulant, dans lequel le dispositif de guidage (50) est déplaçable de manière guidée manuellement et comporte une butée de conduite (51), dans lequel la butée de conduite (51) comporte un creux de logement (52) orienté dans la direction longitudinale (L) pour l'appui sur une conduite (100), et dans lequel un élément de support de machine (60) est logé au niveau de la butée de conduite (51) et est déplaçable par rapport à la butée de conduite (51) ainsi que transversalement à la direction longitudinale (L), et avec une machine portative (70) coupant et/ou meulant qui est montée au niveau de la butée de conduite (51) par l'intermédiaire de l'élément de support de machine (60), dans lequel la machine portative (70) comporte un disque de coupe (71) qui est entraîné en rotation autour d'un axe de rotation (A) par un moteur d'entraînement (72), dans lequel l'axe de rotation (A) est orienté parallèlement à la direction longitudinale (L), et dans lequel le diamètre du disque de coupe (71) est supérieur d'au maximum 20 % au diamètre de la conduite (100), **caractérisé en ce que** le procédé comporte les étapes suivantes :
a) perçage d'un trou (101) dans la conduite (100) ;
b) pose du creux de logement (52) sur la conduite (100) ;
c) déplacement de la machine portative (70) suivant le logement de l'élément de support de machine (60) au niveau de la butée de conduite (51) jusqu'à ce que l'axe de rotation (A) se trouve à l'intérieur de la conduite (100), une coupe avec le disque de coupe (71) étant effectuée au niveau du bord de trou, situé dans la direction longitudinale (L) du trou (101), de la conduite (100).

2. Procédé selon la revendication 1, **caractérisé en ce que** le creux de logement (52) comporte un passage de machine (55) central et **en ce que** la machine portative (70) plonge avec son outil, à savoir son disque de coupe (71), dans le passage de machine (55).

3. Procédé selon l'une des revendications précédentes, **caractérisé en ce que** l'élément de support de machine (60) est monté de manière à pouvoir être déplacé linéairement au niveau de la butée de conduite (51) et **en ce qu'**un déplacement linéaire est effectué.

4. Procédé selon l'une des revendications précédentes, **caractérisé en ce que** le creux de logement (52) est formé par deux évidements terminaux opposés (56, 57) dans les parois d'un tube carré (58) et est posé sur la conduite (100).

5. Procédé selon la revendication 4, **caractérisé en ce que** l'élément de support de machine (60) est monté à l'intérieur du tube carré (58) et la machine portative (70) est montée au moins en partie à l'intérieur du tube carré et **en ce que** la machine portative (70) est déplacée suivant le logement de l'élément de support de machine (60) au niveau de la butée de conduite (51).

6. Dispositif d'usinage (1) pour conduites (100), avec un dispositif de guidage (50) pour usiner une conduite (100) orientée dans la direction longitudinale (L) avec une machine portative (70) coupant et/ou meulant, dans lequel le dispositif de guidage (50) est déplaçable de manière guidée manuellement et comporte une butée de conduite (51), dans lequel la butée de conduite (51) comporte un creux de logement (52) orienté dans la direction longitudinale (L) pour l'appui sur une conduite (100), dans lequel le creux de logement (52) comporte un passage de machine (55) central, et dans lequel un élément de support de machine (60) est logé au niveau de la butée de conduite (51) et est déplaçable par rapport à la butée de conduite (51) ainsi que transversalement à la direction longitudinale (L), et avec une machine portative (70) coupant et/ou meulant qui est montée au niveau de la butée de conduite (51) par l'intermédiaire de l'élément de support de machine (60), dans lequel la machine portative (70) comporte un disque de coupe (71) qui est entraîné en rotation autour d'un axe de rotation (A) par un moteur d'entraînement (72), **caractérisé en ce que** le creux de logement (52) est formé par deux évidements terminaux opposés (56, 57) dans les parois d'un tube carré (58) et la machine portative (70) peut être plongée avec son outil, à savoir son disque de coupe y compris l'axe de rotation (A), dans le passage de machine (55).

7. Dispositif d'usinage (1) selon la revendication 6, **caractérisé en ce que** le disque de coupe (71) comporte un support (76) unilatéral.

8. Dispositif d'usinage (1) selon la revendication 7, **caractérisé en ce que**, à l'opposé du support (76) unilatéral du disque de coupe (71), un écrou de fixation (77) est agencé encastré dans le disque de coupe (71).

9. Dispositif d'usinage (1) selon l'une des revendications 6 à 8, **caractérisé en ce que** l'élément de support de machine (60) est monté de manière à pouvoir être déplacé perpendiculairement à la direction longitudinale (L).

10. Dispositif d'usinage (1) selon l'une des revendications 6 à 9, **caractérisé en ce que** l'élément de support de machine (60) est déplaçable à l'encontre d'une force de ressort d'un élément ressort à partir d'une position de départ (S1) jusque dans une zone de travail (S2), la distance entre l'élément support de machine (60) et le creux de logement (52) étant plus grande dans la position de départ (S1) que dans la zone de travail (S2).

11. Dispositif d'usinage (1) selon l'une des revendications 6 à 10, **caractérisé en ce que** l'élément de support de machine (60) est un moyen de couplage destiné à fixer une machine portative (70) ou une partie d'une machine portative (70).

12. Dispositif d'usinage (1) selon l'une des revendications 6 à 12, **caractérisé en ce que** le tube carré (58) comporte un raccord d'aspiration.

13. Dispositif d'usinage (1) selon l'une des revendications 6 à 13, **caractérisé en ce que** l'axe de rotation (A) est orienté parallèlement à la direction longitudinale (L), la machine portative (70) étant montée, par l'intermédiaire de l'élément de support de machine (60), déplaçable de telle sorte au niveau de la butée de conduite (51), linéairement ainsi que perpendiculairement à la direction longitudinale (L), que le disque de coupe (71) peut être plongé dans l'ouverture de machine (55) centrale du creux de logement (52).

14. Dispositif d'usinage (1) selon l'une des revendications 6 à 13, **caractérisé en ce que** l'élément de support de machine (60) est monté à l'intérieur du tube carré (58).

15. Dispositif d'usinage (1) selon la revendication 14, **caractérisé en ce que** la machine portative (70) est positionnée en partie à l'intérieur du tube carré (58) et comporte une poignée (75) dépassant hors du tube carré (58).
